# EUROPÄISCHE PATENTSCHRIFT

(11) **EP 1 163 441 B1**
(45) Veröffentlichungstag und Bekanntmachung des Hinweises auf die Patenterteilung: **19.10.2005**
(21) Anmeldenummer: 00984909.2
(22) Anmeldetag: 29.11.2000
(51) Int. Cl.: F02M 55/00, F16L 41/04, F16L 55/26

(54) **VERFAHREN ZUR EINBRINGUNG EINER DURCHGANGSÖFFNUNG IN EINEN KRAFTSTOFFHOCHDRUCKSPEICHER UND VORRICHTUNG ZUR DURCHFÜHRUNG DES VERFAHRENS**
METHOD FOR CREATING A THROUGH OPENING IN A HIGH PRESSURE FUEL ACCUMULATOR AND DEVICE FOR CARRYING OUT SAID METHOD
PROCEDE PERMETTANT DE REALISER UN ORIFICE TRAVERSANT DANS UN ACCUMULATEUR HAUTE PRESSION DE CARBURANT ET DISPOSITIF PERMETTANT DE METTRE EN OEUVRE CE PROCEDE

(30) Priorität: 15.01.2000 DE 10001507
(43) Veröffentlichungstag der Anmeldung: 19.12.2001
(73) Patentinhaber: ROBERT BOSCH GMBH, 70442 Stuttgart (DE)
(72) Erfinder: CONRAD, Wolf-Ruediger, 70199 Stuttgart (DE)
(86) Internationale Anmeldenummer: PCT/DE2000/004246
(87) Internationale Veröffentlichungsnummer: WO 2001/053694

(56) Entgegenhaltungen:
- EP-A- 0 304 246
- DE-A- 19 640 480
- DE-C- 4 405 432
- PATENT ABSTRACTS OF JAPAN vol. 1999, no. 03, 31. März 1999 (1999-03-31) & JP 10 318085 A (USUI INTERNATL IND CO LTD), 2. Dezember 1998 (1998-12-02)
- PATENT ABSTRACTS OF JAPAN vol. 1999, no. 12, 29. Oktober 1999 (1999-10-29) & JP 11 182381 A (TOYOTA MOTOR CORP;TOYOTA AUTOM LOOM WORKS LTD), 6. Juli 1999 (1999-07-06)

## Beschreibung

### Stand der Technik

Die Erfindung betrifft ein Verfahren und eine Vorrichtung zur Einbringung von Durchgangsöffnungen in einen Kraftstoffhochdruckspeicher.

Aus der DE 196 40 480 A1 ist ein Kraftstoffhochdruckspeicher für ein Kraftstoffeinspritzsystem für Brennkraftmaschinen bekannt, welcher aus einem langgestreckten rohrartigen Mantelkörper aus Stahl besteht und an eine Kraftstoffhochdruckpumpe anschließbar ist. Der Mantelkörper weist eine sich in Längsrichtung erstreckende, den Innenraum des Kraftstoffhochdruckspeichers bildende, zumindest einseitig offene Durchgangsausnehmung auf. Das wenigstens eine offene Ende wird im fertig montierten Zustand des Kraftstoffhochdruckspeichers durch den Anschluß der Kraftstoffhochdruckpumpe oder eines Druckbegrenzungsventils oder in anderer Weise verschlossen. Der im Kraftstoffhochdruckspeicher enthaltene und mit Hochdruck beaufschlagte Kraftstoff wird über mehrere an dem Mantelkörper ausgebildete Anschlüsse und daran angeschlossene Hochdruckleitungen elektrisch gesteuerten Einspritzventilen, sogenannten Injektoren, zur Einspritzung in die Brennräume einer selbstzündenden Brennkraftmaschine zugeführt. Ein derartiger Kraftstoffhochdruckspeicher wird auch als Common-Rail bezeichnet. Die Anschlüsse des Kraftstoffhochdruckspeichers sind in Form von Anschlußstutzen ausgebildet, welche von dem Mantelkörper abstehen und mit jeweils einer als Bohrung ausgebildeten Durchgangsöffnung versehen sind, die in die Durchgangsausnehmung des Mantelkörpers einmündet. Die Durchgangsöffnungen können auch exzentrisch in die Durchgangsausnehmung einmünden.

Beim der herkömmlichen Herstellung der Durchgangsöffnungen mit einem spanenden Werkzeug entsteht an der Austrittsstelle des Werkzeugs in der Durchgangsausnehmung ein die Bohrung umgebender, mehr oder weniger stark ausgebildeter Grat. Aufgrund des hohen Innendrucks im Kraftstoffhochdruckspeicher von etwa 1350 bar und aufgrund des engen Durchmessers der Bohrungen von typischerweise 2,4 mm rufen abrasive Partikel im Kraftstoff Verschleißerscheinungen im Bereich der durch die Durchgangsöffnung und die Innenwandung der Durchgangsausnehmung gebildeten umlaufenden Kante hervor. Die Entstehung von abrasiven Partikeln wird durch den die Bohrung umgebenden Grat in nachteiliger Weise noch verstärkt, da dort größere Teilchen abgelöst werden können, welche die Einspritzdüsen beschädigen. Darüber hinaus begünstigt das Vorhandensein eines die Bohrung umgebenden Grats die Entstehung von wirbeln und ungünstigen Strömungseigenschaften, welche sich bei den schwellenden Druckbelastungen des Kraftstoffhochdruckspeichers sehr nachteilig auf dessen Lebensdauer auswirken können.

### Vorteile der Erfindung

Durch das Verfahren zur Einbringung von Durchgangsöffnungen in einen Kraftstoffhochdruckspeicher mit den Merkmalen des Anspruchs 1 werden die beschriebenen Nachteile zuverlässig vermieden. Dadurch, daß vor der Einbringung der Durchgangsöffnung ein Druckteil gegen die Innenwandung des Mantelkörpers im Bereich des erwarteten Austritts der Durchgangsöffnung gepreßt wird und mit dem spanenden Werkzeug durch den Mantelkörper hindurch ein Stück weit in das Druckteil gebohrt wird, wird das Entstehen eines die Bohrung umgebenden Grats vorteilhaft vermieden. Dieses Verfahren ist insbesondere an solchen Stellen im Kraftstoffhochdruckspeicher von besonderem Vorteil, an denen ein nachträgliches spanendes Entgraten nicht möglich ist.

In den weiteren Ansprüchen werden vorteilhafte Vorrichtungen zur Durchführung des Verfahrens beschrieben.

Vorteilhaft kann zur Herstellung der Durchgangsöffnung eine in die Durchgangsausnehmung einführbare Spannvorrichtung mit einer ersten Spannbacke, mit einem auswechselbaren Druckteil und einer zweiten Spannbacke und einem zwischen der ersten Spannbacke und der zweiten Spannbacke angeordneten Spannteil verwandt werden, durch welches das Druckteil und die zweite Spannbacke in Anlage an die Innenwandung der Durchgangsausnehmung preßbar ist. Nach der Herstellung der Bohrung, welche in dem Druckteil in einem Sackloch endet, wird die Spannvorrichtung aus dem Kraftstoffhochdruckspeicher entfernt und das Druckteil ausgetauscht. Die Spannvorrichtung steht nun für einen erneuten Einsatz bereit. Vorteilhaft kann das Druckteil als Einlegeteil in eine Ausnehmung der ersten Spannbacke eingesetzt werden. Das Druckteil besteht aus Metall oder einem sehr harten Kunststoff, der in seiner Härte etwa der Härte des Mantelkörpers entspricht.

Vorteilhaft ist der Krümmungsradius der der Innenwandung der Durchgangsausnehmung zugewandten Fläche des Druckteils an den Krümmungsradius der Innenwandung der Durchgangsausnehmung an der zur Einbringung der Durchgangsöffnung vorgesehenen Stelle genau angepaßt.

### Zeichnungen

Ein Ausführungsbeispiel der Erfindung wird in den Zeichnungen dargestellt und in der nachfolgenden Beschreibung erläutert.
Es zeigt
Fig. 1 einen Querschnitt durch einen Kraftstoffhochdruckspeicher mit Anschlußstutzen und einer eingeführten Spannvorrichtung vor der Einbringung einer Bohrung für die Durchgangsöffnung,
Fig. 2 einen Querschnitt durch den Kraftstoffhochdruckspeicher aus Fig. 1 nach der Einbringung der Bohrung,

### Beschreibung eines Ausführungsbeispiels

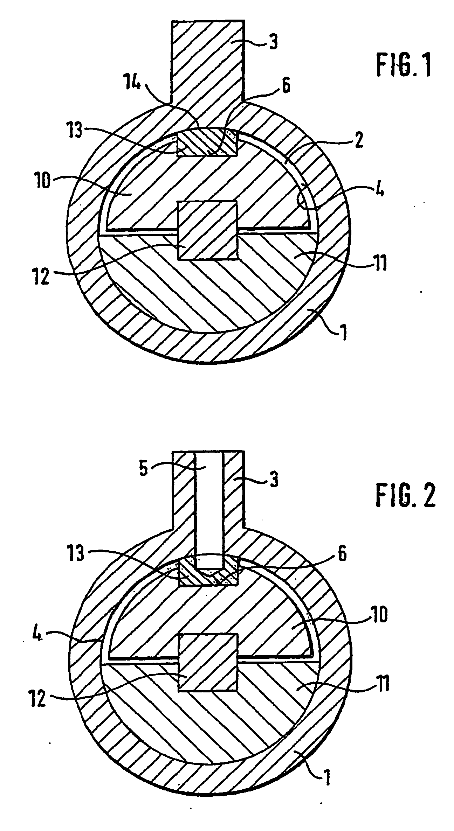

In der Fig. 1 ist ein Querschnitt durch einen Kraftstoffhochdruckspeicher dargestellt, der einen langgestreckten rohrartigen Mantelkörper 1 aus Metall umfaßt, welcher zur Versorgung von Kraftstoffeinspritzventilen angeformte Anschlußstutzen 3 aufweist, welche beispielsweise durch Schmieden hergestellt sind. Natürlich können auch noch weitere Anschlußstutzen 3 vorgesehen sein, welche zum Anschluß einer Kraftstoffhochdruckpumpe oder eines Drucksensors dienen. Der Innenraum des Kraftstoffhochdruckspeichers wird durch eine sich in Längsrichtung des Mantelkörpers 1 erstreckende Durchgangsausnehmung 2 mit vorzugsweise kreisförmigen Querschnitt gebildet. Der Querschnitt kann aber auch eine andere Form aufweisen und beispielsweise ellipsenförmig sein. Die in dem Mantelkörper 1 ausgebildete Durchgangsausnehmung 2 kann an einer Stirnseite fest verschlossen sein. Die andere Stirnseite ist offen und kann zum Beispiel mit einem aufgeschraubten Druckbegrenzungsventil, dem Anschluß der Kraftstoffhochdruckpumpe, einem Deckel oder in anderer Weise verschlossen werden.

Wie nun weiterhin in Fig. 1 dargestellt ist, ist eine Spannvorrichtung von der offenen Seite des Kraftstoffhochdruckspeichers aus in die Durchgangsausnehmung 2 eingeschoben. Die Spannvorrichtung umfaßt ein zentrales Spannteil 12 und zwei im Querschnitt halbkreisförmige Spannbacken 10 und 11. Die Spannbacken können aber auch eine andere Querschnittsform aufweisen. In dem hier gezeigten Beispiel ist der Außenradius der ersten Spannbacke 11 an den Krümmungsradius der Innenwandung 4 der Durchgangsausnehmung 2 angepaßt. Der Außenradius der zweiten Spannbacke 10 ist etwas kleiner als der Krümmungsradius der Innenwandung 4 der Durchgangsausnehmung 2 ausgelegt. Wie weiterhin zu erkennen ist, ist derjenige Bereich der zweiten Spannbacke 10, welcher dem Anschlußstutzen 3 zugewandt ist, mit einer Ausnehmung 6 versehen, in die ein Druckteil 13 eingesetzt ist. Die der Innenwandung 4 zugewandte Flächenkontur 14 des Druckteils 13 ist genau an die Kontur der Innenwandung 4 angepaßt. In dem hier gezeigten Ausführungsbeispiel weisen also die Flächenkontur 14 und die Innenwandung 4 den gleichen sphärischen Krümmungsradius auf. An den anderen Anschlußstutzen des Mantelkörpers 1 sind entsprechend weitere Ausnehmungen und weitere Druckteile vorgesehen. Falls die Anschlußstutzen von dem Mantelkörper 1 aus nicht alle in die gleich Richtung abstehen, muß die Spannvorrichtung gegebenenfalls gedreht werden, um alle Bohrungen herstellen zu können. Die Spannbacken 10,11, das Spannteil 12 und die Druckteile 13 sind aus Metall gefertigt. Es ist aber auch denkbar, ein anderes geeignetes Material zu verwenden. Beispielsweise können die Druckteile auch aus einem sehr harten Kunststoff gefertigt werden.

Das zentrale Spannteil 12 weist weiterhin eine keilförmige Kontur auf. Durch Einschieben des Spannteils 12 wird die erste Spannbacke 11 und das Druckteil 13 an sich diametral gegenüberliegende Abschnitte der Innenwandung 4 der Durchgangsausnehmung gepreßt. Wie in Fig. 2 dargestellt ist, wird zur Herstellung einer Durchgangsöffnung anschließend eine sacklochartige Bohrung 5 in den Anschlußstutzen 3 und das Druckteil 13 eingebracht. Dabei wird von außen mit dem Bohrwerkzeug durch den Anschlußstutzen 3 und den Mantelkörper 1 ein Stück weit in das Druckteil 13 gebohrt. Hierbei wird vorteilhaft so gebohrt, daß die gesamte Spitze des Bohrwerkzeugs in das Druckteil 13 eintritt. Durch das Druckteil 13 wird die Entstehung eines Grats an der durch die Innenwandung 4 und die Bohrung 5 gebildeten Kante vermieden. Ebenso wird bei den übrigen Anschlußstutzen verfahren. Anschließend wird das Bohrwerkzeug und die Spannvorrichtung 10,11,12,13 entfernt. Die Anschlußstutzen 3 können nun noch mit einem Schraubgewinde versehen werden, auf welches über eine Kegeldichtung eine Hochdruckverbindungsleitung anschließbar ist. Nach der Entnahme der Spannvorrichtung können die Einlegeteile 13 ausgetauscht werden. Die Spannvorrichtung steht nun erneut bereit zur Einbringung von weiteren Bohrungen in dem nächsten zu bearbeitenden Kraftstoffhochdruckspeicher.

## Patentansprüche

1. Verfahren zur Einbringung einer Durchgangsöffnung in einen Kraftstoffhochdruckspeicher, welcher einen langgestreckten, rohrartigen Mantelkörper (1) aufweist, der in Längsrichtung mit einer den Innenraum des Kraftstoffhochdruckspeichers bildenden zumindest einseitig offenen Durchgangsausnehmung (2) versehen ist, wobei die Durchgangsöffnung (5) mit einem spanenden Werkzeug in Form einer Bohrung in den Mantelkörper (1) derart eingebracht wird, daß sie in die Durchgangsausnehmung (2) einmündet, **dadurch gekennzeichnet, daß** vor der Einbringung der Durchgangsöffnung ein Druckteil (13) gegen die Innenwandung (4) des Mantelkörpers (1) im Bereich des erwarteten Austritts der Durchgangsöffnung (5) gepreßt wird und mit dem spanenden Werkzeug durch den Mantelkörper (1) hindurch ein Stück weit in das Druckteil (13) gebohrt wird.

2. Vorrichtung zur Durchführung des Verfahrens nach Anspruch 1, mit Mitteln zur Herstellung einer Durchgangsõffnung im Mantelkörper eines Kraftstoffhochdruckspeichers, der eine zumindest einseitig offene Durchgangsausnehmung (2) aufweist, wobei die Mittel ein spanendes Werkzeug zur Herstellung einer Bohrung umfassen, **dadurch gekennzeichnet, daß** eine in die Durchgangsausnehmung (2) einführbare Spannvorrichtung (10,11,12,13) mit einer ersten Spannbacke (10) mit auswechselbarem Druckteil (13) und einer zweiten Spannbacke (11) und einem zwischen der ersten Spannbacke (10) und der zweiten Spannbacke (11) angeordneten Spannteil (12) in die Durchgangsausnehmung (2) einführbar ist, durch welches Spannteil das Druckteil (13) und die zweite Spannbacke (11) in Anlage an die Innenwandung (4) der Durchgängsausnehmung (2) preßbar ist.

3. Vorrichtung nach Anspruch 2, **dadurch gekennzeichnet, daß** das Druckteil (13) als Einlegeteil in eine Ausnehmung (6) der ersten Spannbacke (10) einsetzbar ist.

4. Vorrichtung nach Anspruch 2 oder 3, **dadurch gekennzeichnet, daß** das Druckteil (13) aus Metall oder einem sehr harten Kunststoff besteht.

5. Vorrichtung nach einem der Ansprüche 2 bis, 4, **dadurch gekennzeichnet, daß** der Krümmungsradius der der Innenwandung (4) der Durchgangsausnehmung (2) zugewandten Fläche (14) des Druckteils (13) an den Krümmungsradius der Innenwandung (4) der Durchgangsausnehmung (2) an der zur Einbringung der Durchgangsöffnung (5) vorgesehenen Stelle genau angepaßt ist.

## Claims

1. Method for introducing a passage orifice into a high-pressure fuel accumulator which has an elongate tube-like casing body (1) which is provided in the longitudinal direction with an at least unilaterally open passage recess (2) forming the inner space of the high-pressure fuel accumulator, the passage orifice (5) being introduced in the form of a bore into the casing body (1) by means of a cutting tool, in such a way that the said passage orifice issues into the passage recess (2), **characterized in that**, before the introduction of the passage orifice, a pressure part (13) is pressed against the inner wall (4) of the casing body (1) in the region of the expected emergence of the passage orifice (5), and drilling through the casing body (1) a little way into the pressure part (13) is carried out by means of the cutting tool.

2. Device for carrying out the method according to Claim 1, with means for producing a passage orifice in the casing body of a high-pressure fuel accumulator, the said casing body having an at least unilaterally open passage recess (2), the means comprising a cutting tool for producing a bore, **characterized in that** a clamping device (10, 11, 12, 13) capable of being introduced into the passage recess (2) and having a first clamping jaw (10) with an exchangeable pressure part (13) and a second clamping jaw (11) and with a clamping part (12) arranged between the first clamping jaw (10) and the second clamping jaw (11) can be introduced into the passage recess (2), by means of which clamping part the pressure part (13) and the second clamping jaw (11) can be pressed into bearing contact against the inner wall (4) of the passage recess (2).

3. Device according to Claim 2, **characterized in that** the pressure part (13) can be inserted as an insertion part into a recess (6) of the first clamping jaw (10).

4. Device according to Claim 2 or 3, **characterized in that** the pressure part (13) consists of metal or of a very hard plastic.

5. Device according to one of Claims 2 to 4, **characterized in that** the radius of curvature of that face (14) of the pressure part (13) which confronts the inner wall (4) of the passage recess (2) is exactly matched to the radius of curvature of the inner wall (4) of the passage recess (2) at the point intended for the introduction of the passage orifice (5).

## Revendications

1. Procédé pour pratiquer un orifice de passage dans une rampe haute pression de carburant munie d'une enveloppe (1) tubulaire allongée qui comporte en direction longitudinale une cavité de passage (2), ouverte au moins d'un côté, formant l'espace intérieur de la rampe haute pression de carburant, l'orifice de passage (5) étant pratiqué sous forme d'un perçage dans l'enveloppe (1) à l'aide d'un outil d'usinage de telle manière qu'il débouche dans la cavité de passage (2),
**caractérisé en ce que**
avant de pratiquer l'orifice de passage, une pièce d'appui (13) est pressée contre la paroi intérieure (4) de l'enveloppe (1) dans la zone où on prévoit que l'orifice de passage (5) sortira et l'outil d'usinage perce entièrement l'enveloppe (1) un peu plus loin dans la pièce d'appui (13).

2. Dispositif pour réaliser le procédé selon la revendication 1, comportant des moyens pour fabriquer un orifice de passage dans l'enveloppe d'une rampe haute pression de carburant munie au moins d'un côté d'une cavité de passage (2) ouverte, les moyens comprenant un outil d'usinage pour produire un perçage,
**caractérisé en ce qu'**
il est possible d'introduire dans la cavité de passage (2) un dispositif de serrage (10, 11, 12, 13) susceptible d'être introduit dans la cavité de passage (2) et comportant une première mâchoire de serrage (10) munie d'une pièce d'appui (13) interchangeable et une deuxième mâchoire de serrage (11) et une pièce de serrage (12) placée entre la première mächoire de serrage (10) et la deuxième mâchoire de serrage (11), la pièce d'appui (13) et la deuxième mâchoire de serrage (11) pouvant être pressées par cette pièce de serrage contre la paroi intérieure (4) de la cavité de passage (2).

3. Dispositif selon la revendication 2,
**caractérisé en ce que**
la pièce d'appui (13) peut être insérée comme pièce d'insertion dans une cavité (6) de la première mâchoire de serrage (10).

4. Dispositif selon la revendication 2 ou 3,
**caractérisé en ce que**
la pièce d'appui (13) est en métal ou en une matière plastique très dure.

5. Dispositif selon l'une des revendications 2 à 4,
**caractérisé en ce que**
le rayon de courbure de la surface (14) - de la pièce d'appui (13) - tournée vers la paroi intérieure (4) de la cavité de passage (2) est ajusté au rayon de courbure de la paroi intérieure (4) de la cavité de passage (2) à l'endroit où on prévoit de pratiquer l'orifice de passage (5).
